# EUROPÄISCHE PATENTANMELDUNG

(11) **EP 0 916 303 A1**
(43) Veröffentlichungstag der Anmeldung: **19.05.1999**
(21) Anmeldenummer: 98116846.1
(22) Anmeldetag: 07.09.1998
(51) Int. Cl.: A47L 15/42, G01N 9/18, G01N 9/12

(54) **Konzentrationsanzeige**

(30) Priorität: 14.11.1997 DE 19750472
(71) Anmelder: AEG Hausgeräte GmbH, 90429 Nürnberg (DE)
(72) Erfinder: Kohles, Dieter, 91459 Markt Erlbach (DE)

(57) **Zusammenfassung**

Eine Konzentrationsanzeige für den Salzgehalt einer Lösung 2 weist einen Schwimmer (10) mit einer ersten Markierung (12) und einer zweiten Markierung (14) auf. Die erste Markierung (12) zeigt einen ersten Konzentrationsbereich der Lösung 2 und die zweite Markierung (14) einen unter dem ersten Konzentrationsbereich liegenden zweiten Konzentrationsbereich an. Bei einem Ausführungsbeispiel ist der Schwimmer (10) drehbar gelagert, wobei die erste/zweite Markierung (12, 14) aus einer Richtung gut beobachtet werden kann, die unter einem Winkel zur horizontalen Ebene nach oben steht.

## Beschreibung

Die Erfindung betrifft eine Konzentrationsanzeige gemäß dem Oberbegriff des Anspruchs 1.

Bei einer Haushalts-Geschirrspülmaschine ist eine Konzentrationsanzeige einer Salzlösung bekannt, welche die Änderung der Solekonzentration zur Anzeige bringt. Die Salzlösung wird zur Regenerierung eines Enthärters mit einem Ionenaustauscher benötigt, wobei für einen ausreichenden Regeneriervorgang ein unterer Wert der Konzentration nicht unterschritten werden darf.

Der Regeneriervorgang wird eingeleitet, indem in den Solebehälter eine vorgegebene Menge Frischwasser eingeleitet und dadurch gleichzeitig ein entsprechend großes Solevolumen dem Ionenaustauscher zugeführt wird. Solange sich im Solebehälter ungelöstes Regeneriersalz befindet, weist auch die Solekonzentration eine ausreichende Höhe auf. Die Solekonzentration verringert sich, wenn das gespeicherte Regeneriersalz aufgebraucht ist und das nachfließende Frischwasser die Salzlösung verdünnt.

Bei dieser bekannten Konzentrationsanzeige ist innerhalb der Salzlösung ein Schwimmer angeordnet, welcher einen Anzeigestift mit einer Anzeigefahne aufweist (Fig. 4).

Solange die Salzlösung eine ausreichende Konzentration hat, schwimmt der Schwimmer infolge eines im Vergleich zur Salzlösung geringeren spezifischen Gewichtes auf, so daß die Anzeigefahne die ausreichende Konzentration anzeigt. Unterschreitet die Salzkonzentration einen vorgegebenen Wert, so daß folglich auch das spezifische Gewicht der Salzlösung das spezifische Gewicht des Schwimmers unterschreitet, sinkt der Schwimmer und das gleichzeitige Verschwinden der Anzeigefahne signalisiert eine zu geringe Solekonzentration.

Die Anzeigefahne kann durch ein Kontrollfenster im Behälterboden der Geschirrspülmaschine beobachtet werden, so daß der Betreiber beim Verschwinden derselben einen Hinweis zum Nachfüllen von Regeneriersalz erhält.

Dieses Verschwinden einer Anzeige im Zustand der eingeschränkten Gebrauchstauglichkeit eines Gerätes hat für dessen Betreiber jedoch eine zu geringe Signalwirkung.

Es ist daher Aufgabe der Erfindung, eine Konzentrations anzeige für den Salzgehalt einer Lösung anzugeben, bei der ein erforderliches Nachfüllen von Salz besonders deutlich erkennbar ist.

Die Lösung der Aufgabe erfolgt gemäß der Erfindung bei einer Konzentrationsanzeige der eingangs genannten Art durch das kennzeichnende Merkmal des Anspruchs 1.

Dadurch, daß bei einer Konzentrationsanzeige für den Salzgehalt einer Lösung mit einem Schwimmer, dessen spezifisches Gewicht auf eine vorgegebene Salzkonzentration abgestimmt ist, ein mit dem Schwimmer mechanisch gekoppeltes Anzeigeelement vorgesehen ist, welches erst dann selbst optisch signalgebend in Erscheinung tritt, wenn der Salzgehalt einen unteren Konzentrationsgrenzwert unterschreitet, ist eine Konzentrationsanzeige geschaffen, bei der ein erforderliches Nachfüllen von Salz besonders deutlich erkennbar ist. Auf diese Weise wird der Betreiber des Gerätes besonders augenscheinlich auf einen Salzmangel hingewiesen.

Vorteilhafte Ausgestaltungen der Erfindung sind in den Unteransprüchen 2 bis 18 angegeben.

Der Schwimmer weist vorteilhafterweise mindestens zwei Markierungen auf, welche unterschiedliche Bereiche der Solekonzentration anzeigen. Beispielsweise weist eine erste Markierung auf einen ersten Bereich einer hohen Konzentration der Lösung und eine zweite Markierung, sinnvollerweise mit einer besonders hohen Signalwirkung, auf einen zweiten Bereich einer niedrigen Konzentration der Lösung hin. Handelt es sich bei der Konzentrationsanzeige um die Anzeige in einem Solebehälter einer Enthärtereinrichtung bei einer Geschirrspülmaschine, so kann die erste Markierung eine ausreichende Salzmenge in der Lösung anzeigen, während die zweite Markierung auf eine Salzkonzentration hinweist, bei der ein Nachfüllen von Salz in die Lösung erforderlich ist.

Zwischen der ersten und der zweiten Markierung kann wenigstens eine weitere Markierung vorgesehen sein, damit ein oder mehrere Zwischenzustände der Konzentration der Lösung beobachtet werden können. Durch die Zwischenwerte erhält man einen Hinweis auf einen fortgeschrittenen Verbrauch. Ebenso kann bereits vor dem Erreichen der zweiten Markierung z. B. Salz für die nächste Füllung rechtzeitig bereitgestellt werden. Statt mehrerer Markierungen kann durch einen kontinuierlichen Übergang von der ersten zur zweiten Markierung die Genauigkeit der Auflösung erhöht werden.

Um eine mehrstufige oder kontinuierliche Anzeige derart realisieren zu können und zu verhindern, daß der Schwimmer unmittelbar von einem aufschwimmenden in einen abgesunkenen Zustand übergeht, so daß der bzw. die Zwischenzustände auch ablesbar sind, ist es erforderlich, daß der Auftriebskraft des Schwimmers eine von seiner Höhenlage abhängige Gegen-kraft entgegenwirkt. Dies kann beispielsweise durch eine Feder mit einer kleinen Federkonstanten erfolgen, deren Federkraft während des Absinkens des Schwimmers kontinuierlich ansteigt.

Vorteilhafterweise wird die Gegenkraft jedoch dadurch erzeugt, daß bei ausreichender Konzentration der Schwimmer nicht vollständig in die Sole eintaucht. Verringert sich die Solekonzentration, sinkt der Schwimmer allmählich ab, wobei dieses Absinken dadurch verzögert erfolgt, daß das der Auftriebswirkung ausgesetzte Volumen bis zum vollständigen Eintauchen des Schwimmers ansteigt, wodurch sich die Auftriebskraft proportional erhöht. Der Schwimmer folgt der Abnahme der Solekonzentration verlangsamt, so daß bis zum yollständigen Absinken des Schwimmers eine große Konzentrationsänderung erforderlich ist.

Vorteilhafterweise sind die Markierungen so angeordnet, daß sie von schräg oben oder von oben beobachtet werden können. Dies ist vorteilhaft, wenn bei einem Behälter mit der Lösung die Konzentration nur unter einem Winkel beobachtet werden kann.

Bei einer Ausgestaltung der Konzentrationsanzeige lassen sich die Markierungen am Schwimmer über einen Lichtleiter beobachten. Dadurch ist es z.B. möglich, die Markierungen unter einem Winkel oder an einer Stelle zu beobachten, die einer direkten Beobachtung nicht zugänglich ist. Im Zusammenhang mit der Beobachtung von oben ist es hier z.B. möglich, seitlich am Schwimmer angeordnete Markierungen zu beobachten. Dabei kann der Lichtleiter so ausgebildet werden, daß die Markierung vergrößert beobachtet werden kann.

Bei einer weiteren Ausführungsform ist der Schwimmer drehbar gelagert, so daß bezüglich der Oberfläche der Lösung die Bewegung des Schwimmers in Abhängigkeit der Konzentration der Lösung der Schwimmer eine Schwenkbewegung an einer feststehenden Achse nach oben oder unten ausführt. Dadurch läßt sich die Lagerung und Führung des Schwimmers stabilisieren. Auch läßt sich das Spiel des Schwimmers reduzieren und der Bereich, in dem sich die Markierungen zum Beobachten befinden, ist genauer festgelegt.

Weist der drehbar gelagerte Schwimmer der Lagerung gegenüberliegend einen bogenförmigen Abschnitt auf, so lassen sich an diesem die Markierungen anbringen und die Konzentrationsänderung führt zu einer Verschiebung der Markierungen entlang eines Kreisbogens.

Durch Vorsehen von Anschlägen für die obere und untere Position des verschwenkbaren Schwimmers wird der Bewegungsbereich des Schwimmers festgelegt. Dadurch kann verhindert werden, daß der Schwimmer mit dem kreisförmigen Umfang in einem oberen oder unteren Umkehrpunkt festsitzt.

Entsprechend einer weiteren Ausführungsform der Konzentrationsanzeige ist der Schwimmer in einer Aufnahmeeinrichtung gelagert. Die Aufnahmeeinrichtung kann an einer Wand des Vorratsgefäßes für die Lösung befestigt werden. Die Aufnahmeeinrichtung kann z. B. eine Verschlußkappe für das Vorratsgefäß sein. Dadurch muß der Schwimmer nicht gesondert im Vorratsgefäß montiert werden. Der Schwimmer kann auch mit der Aufnahmeeinrichtung einfach zum Reinigen oder zur Wartung entnommen werden. Durch ein zusätzliches Beobachtungsfenster in der Aufnahmeeinrichtung können die Markierungen beobachtet werden.

Die vorstehenden Ausführungsbeispiele der Konzentrationsanzeige können so gestaltet werden, daß der Schwimmer nur eine Markierung aufweist und diese Markierung des Schwimmers durch ein Beobachtungsfenster mit einem durch Markierungen unterteilten Bereich beobachtet wird.

Die Konzentration der Lösung ergibt sich dann aus der Stellung der Markierung des Schwimmers bezüglich der Markierungen auf dem Beobachtungsfenster. Dadurch kann der Schwimmer einfacher gestaltet werden und die direkte Anzeige z. B. des Sättigungswertes der Lösung und des Salzmangels erfolgt anhand zweier Markierungen am Beobachtungsfenster.

Die Erfindung wird nachstehend anhand der Figuren von Ausführungsbeispielen näher erläutert.

Es zeigen:
- Fig. 1: einen Schwimmer zur Konzentrationsanzeige gemäß der Erfindung,
- Fig. 2: ein Ausführungsbeispiel eines drehbar gelagerten Schwimmers,
- Fig. 3: ein weiters Ausführungsbeispiel eines drehbar gelagerten Schwimmers, der in einen Verschluß für einen Lösungsbehälter integriert ist, und
- Fig. 4: einen herkömmlichen Schwimmer zur Konzentrationsanzeige.

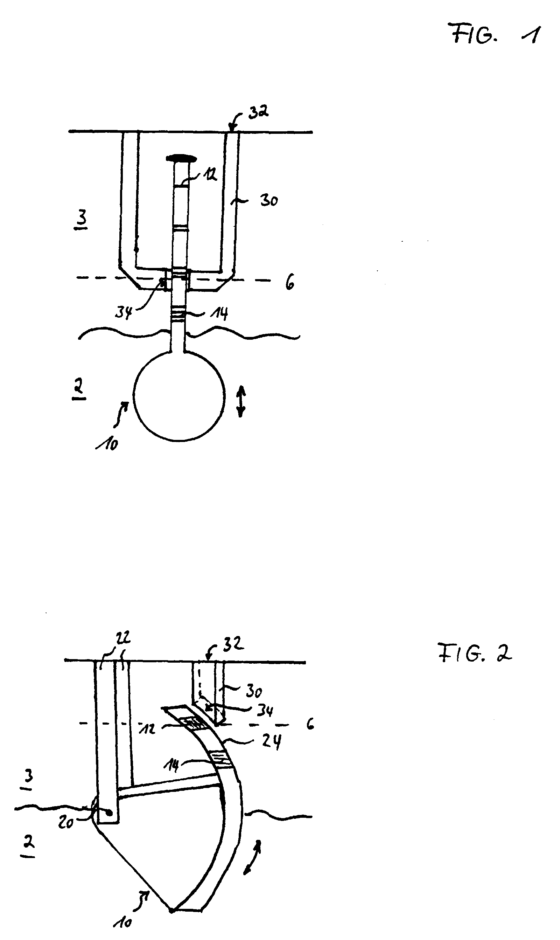

Fig. 1 zeigt ein erstes Ausführungsbeispiel einer Konzentrationsanzeige für den Salzgehalt einer Lösung 2. Die Konzentrationsanzeige umfaßt einen Schwimmer 10, der mit seinem unteren Teil in die Lösung 2 eintaucht. Sein oberer Teil ragt aus der Lösung heraus und ist von Luft 3 umgeben. Er weist eine obere Markierung 12 sowie eine untere Markierung 14 auf. Der eintauchende Teil und der aus der Lösung herausragende Teil ändern sich mit der Konzentration der Lösung 2, bis sich zwischen dem Auftrieb des unteren Teils und der Gewichtskraft des gesamten Schwimmers 10 ein Gleichgewicht einstellt.

Der Auftrieb des in die Lösung 2 eintauchenden Teils des Schwimmers 10 hängt von dessen spezifischem Gewicht und der Dichte der Lösung 2 ab. Dabei taucht der Schwimmer 10 ab, wenn die Konzentration der Lösung 2 abnimmt und umgekehrt.

Am Körper des Schwimmers 10 ist die untere Markierung 14 so angeordnet, daß sie in der Höhe eines Beobachtungsniveaus 6 liegt, wenn die Lösung 2 mit Salz gesättigt ist, wogegen die obere Markierung 12 am Schwimmer 10 so angeordnet ist, daß sie auf der Höhe des Beobachtungsniveaus 6 liegt, wenn die Konzentration der Lösung 2 auf einen vorgegebenen Wert einer nicht ausreichenden Sättigung abgefallen ist. Bei einer Spülmaschine wird der vorgegebene Wert durch das Erreichen einer unteren Salzkonzentration der Lösung 2 bestimmt, bei der ein ausreichendes Regenerieren eines Enthärters aufgrund von Salzmangel nicht mehr gewährleistet ist.

Die obere und untere Markierung 12,14 können z. B. farblich und/ oder durch die Form voneinander unterscheidbare Markierun-gen oder alphanumerische Markierungen sein. Z. B. kann für die untere Markierung 14, die die Sättigung der Lösung 2 anzeigt, eine grüne Farbmarkierung und für die obere Markierung 12, die den Salzmangel anzeigt, eine rote Farbmarkierung verwendet werden. Die Farbmarkierungen können aneinandergrenzen, so daß bei einer bestimmten Konzentration ein Farbumschlag erfolgt.

Der Beobachtungsbereich des Schwimmers 10 ist der Bereich, in dem sich der Schwimmer von der obersten Stelle der oberen Markierung 12 bis zur untersten Stelle der unteren Markierung 14 bezüglich des Beobachtungsniveaus 6 bei Konzentrationsänderung (unterer Grenzwert bis Sättigung der Lösung) bewegen kann. Dieser Bereich läßt sich durch die Gewichtsaufteilung zwischen dem oberen und unteren Teil des Schwimmers 10 sowie durch eine geeignete Gewichtsverteilung des oberen Teils nach Bedarf einstellen. Ist der obere Teil gegenüber dem unteren dünn ausgestaltet, so ist der Beobachtungsbereich größer als der Beobachtungsbereich bei einem oberen Teil, der so groß wie der untere Teil ist.

Bei weiteren Ausführungsbeispielen des Schwimmers können längs des Beobachtungsbereichs zwischen der oberen Markierung 12 und der unteren Markierungen 14 weitere Markierungen angeordnet sein, wie dies in Fig. 1 dargestellt ist. Der Beobachtungsbereich in Fig. 1 ist am Schwimmer 10 durch ein bis vier Striche bzw. Kreise unterteilt.

Anhand der Unterteilung des Beobachtungsbereichs durch mehrere Markierungen können Zwischenwerte der Konzentration abgelesen werden. Sobald sich das Salz vollständig in der Lösung 2 aufgelöst hat und die Sättigung der Lösung 2 unterschritten wird, kann anhand mehrerer Markierungen von Spülgang zu Spülgang der Salzverbrauch beobachtet werden. Auch können die zusätzlichen Markierungen dazu dienen, die untere Markierung in mehrere Positionen zu unterteilen, wobei in Abhängigkeit der Härte des Wassers jeweils eine der unteren Markierungen zur Anzeige des Salzmangels dient.

Bei einem weiteren Ausführungsbeispiel ist der Schwimmer 10 an einem Lager 20 dreh- oder schwenkbar an Stützen 22 gelagert (Fig. 2). Der Schwimmer 10 weist bei diesem Ausführungsbeispiel eine bogenförmige Verlängerung 24 auf, die sich vom oberen Ende des eigentlichen Schwimmkörpers nach oben erstreckt und zum oberen Teil des Schwimmers zählt. Dabei sind die Markierungen 12, 14 zur Beobachtung der Konzentration der Lösung 2 an dieser bogenförmigen Verlängerung 24 angeordnet.

Durch das Lager 20 wird die Auf- bzw. Abwärtsbewegung des Schwimmers 10 in eine Verschwenkung in Auf- bzw. Abwärtsrichtung um das Lager 20 umgesetzt. Auf der bogenförmigen Verlängerung lassen sich die Markierungen am günstigsten aus einer Richtung senkrecht zur bogenförmigen Verlängerung 24 beobachten. Je nachdem in welcher Höhe das Beobachtungsniveau 6 liegt, ist die Beobachtungsrichtung zur Oberfläche der Lösung 2 geneigt.

Durch die Lagerung des Schwimmers 10 am Lager 20 ist die Bewegungsfreiheit des Schwimmers 10 festgelegt. Der Schwimmer 10 kann sich nicht um seine vertikale Achse drehen. Dadurch ist ebenfalls das Bewegungsspiel des Beobachtungsbereichs eingeschränkt und die Stelle, an der die Markierungen entlang des Beobachtungsbereichs beobachtet werden können, ist genauer festgelegt.

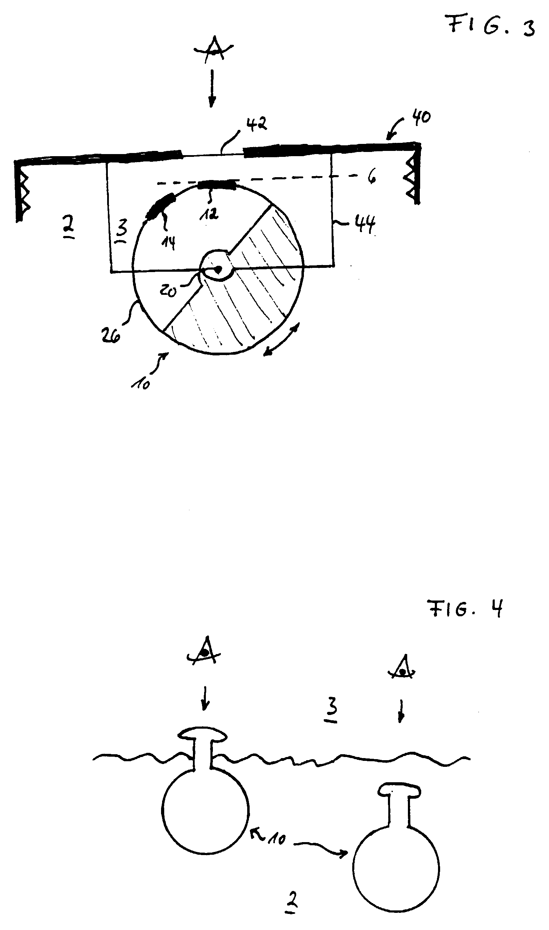

Fig. 3 zeigt ein weiteres Ausführungsbeispiel eines dreh-bar gelagerten Schwimmers 10, bei dem die bogenförmige Verlängerung 24 als Kreisring 26 ausgebildet ist. Im Kreisring 26 ist der Schwimmerkörper bezüglich des Lagers 20 asymmetrisch angeordnet. Durch einen Pfeil ist die senkrecht zur Ebene der Lösung 2 stehende Beobachtungsrichtung angedeutet.

Bei den drehbar gelagerten Ausführungsbeispielen können je ein Anschlag für die obere Position, in der die Lösung 2 gesättigt ist, und die untere Position, in der die Lösung 2 einen unteren Grenzwert erreicht, vorgesehen werden. Die Anschläge können am Schwimmerkörper, der teilweise in die Lösung 2 eintaucht, an der bogenförmigen Verlängerung 24 oder z.B. an den Stützen 22 befestigt werden. Durch die Anschläge wird der Verschwenkungsbereich auf den Beobachtungsbereich zwischen der oberen Markierung 12 und der unteren Markierung 14 festgelegt und es kann vermieden werden, daß der Schwimmer 10 in einer oberen oder unteren Position der Lagerung festsitzt, nachdem z. B. die Kraftdifferenz zwischen Auftrieb und Schwerkraft in Richtung der Lagerung gewirkt hat.

Wie dies in den Fig. 1 und 2 dargestellt ist, können die Markierungen am Schwimmer 10 auch über einen Lichtleiter 30 beobachtet werden. Der Lichtleiter 30 weist dabei eine in Richtung Beobachter gelegene Beobachtungsfläche 32 und eine der Markierung gegenüberliegende Stirnfläche 34 auf.

Beim Ausführungsbeispiel von Fig. 1 umschließt der Lichtleiter 30 den oberen Teil des Schwimmers 10 und ist am unteren Teil eingeschnürt. Der untere, eingeschnürte Teil lenkt von oben kommende Lichtstrahlen zum seitlich gelegenen Beobachtungsbereich des Schwimmers 10 hin ab, so daß die seitlich gelegenen Markierungen von oben durch den Lichtleiter 30 beobachtet werden können. Weiter kann der untere, eingeschnürte Teil des Lichtleiters 30 enger sein als ein oberes, dickeres Ende des Schwimmers 10, so daß der Schwimmer 10 durch den Lichtleiter 30 lose gehalten wird und sich nur entlang des Beobachtungsbereichs von oberer Markierung 12 bis zur unteren Markierung 14 auf- und abbewegen kann.

In Fig. 2 ist die Beobachtungsfläche 32 des Lichtleiters 30 ebenfalls nach oben geführt und die den zu beobachtenden Markierungen gegenüberliegende Stirnfläche 34 ist mit einem Radius gekrümmt, um der bogenförmigen Verlängerung 24 dicht gegenüberzustehen.

Der Lichtleiter 30 dient u. a. dazu, die Markierungen an einer Stelle zu beobachten, die vom Beobachter nicht direkt eingesehen werden kann. Weiterhin kann durch die Formgebung des Lichtleiters 30 der beobachtete Bereich vergrößert werden, so daß selbst bei einem kleinen Beobachtungsbereich des Schwimmers 10 zwischen der unteren und der oberen Position die Markierung genau abgelesen werden kann.

Ein Schwimmer 10 entsprechend der vorstehenden Ausführungsbeispiele kann in einen Verschluß 40 für den Vorratsbehälter mit der Lösung 2, deren Konzentration gemessen werden soll, integriert werden (Fig. 3). Der Verschluß weist ein Beobachtungsfenster 42 auf, durch das die Markierungen beobachtet werden können. Weiterhin kann der Verschluß eine Hülse 44 aufweisen, die auf der Innenseite des Verschlusses befestigt ist und an der der Schwimmer 10 gelagert ist. Beim Befestigen des Verschlusses auf dem Vorratsbehälter wird im Innenraum der Hülse Luft 3 eingeschlossen, die dann den oberen Teil des Schwimmers 10 umgibt. Dadurch wird gewährleistet, daß die Luft nicht durch die Lösung 2 verdrängt wird und das Niveau der Grenzfläche Luft/Lösung festgelegt ist.

Beim in Fig. 3 gezeigten Ausführungsbeispiel ist das Lager 20 für den Schwimmer 10 in der Hülse 44 integriert, so daß keine zusätzlichen Stützen 22 zur Lagerung erforderlich sind. Der Lichtleiter 30 zum Beobachten der Markierungen kann hier am Beobachtungsfenster 42 befestigt werden.

Wird der Lichtleiter 30 und der Schwimmer 10 nach dem in Fig. 1 gezeigten Ausführungsbeispiel im Verschluß 40 integriert, so kann auf die Hülse 44 verzichtet werden, wenn der Lichtleiter 30 mit seinem unteren Teil in die Lösung eintaucht. In diesem Fall stellt der Lichtleiter 30 selbst eine Hülse dar, in der die Luft 3 eingeschlossen ist. Bei dieser Anordnung werden weniger Bauteile zum Aufbau eines Verschlusses mit integriertem Schwimmer 10 benötigt.

Bei einer weiteren Ausgestaltung der Ausführungsbeispiele kann der Schwimmer 10 nur eine Markierung aufweisen, während am Beobachtungsfenster 42 in einem Bereich, innerhalb dessen die eine Markierung des Schwimmers 10 beobachtet werden kann, weitere Markierungen vorgesehen werden, so daß aufgrund der Stellung der einen Markierung des Schwimmers 10 gegenüber den anderen Markierungen auf die Konzentration der Lösung 3 geschlossen werden kann.

## Patentansprüche

1. Konzentrationsanzeige für den Salzgehalt einer Lösung mit einem Schwimmer, dessen spezifisches Gewicht auf eine vorgegebene Salzkonzentration abgestimmt ist, dadurch gekennzeichnet, daß ein mit dem Schwimmer (10) mechanisch gekoppeltes Anzeigeelement vorgesehen ist, welches erst dann selbst optisch signalgebend in Erscheinung tritt, wenn der Salzgehalt einen unteren Konzentrationsgrenzwert unterschreitet.

2. Konzentrationsanzeige nach Anspruch 1
dadurch gekennzeichnet, daß der Schwimmer (10) mindestens zwei Markierungen aufweist, wobei
eine erste Markierung (14) einen ersten Bereich einer hohen Konzentration und
eine zweite Markierung (12) einen zweiten Bereich einer niedrigen Konzentration der Lösung (2) anzeigt.

3. Konzentrationsanzeige nach Anspruch 2,
dadurch gekennzeichnet, daß zwischen der ersten Markierung (14) und der zweiten Markierung (12) noch wenigstens eine weitere Markierung angeordnet ist, um einen Zwischenbereich der Konzentration zwischen dem ersten und zweiten Konzentrationsbereich der Lösung (2) anzuzeigen.

4. Konzentrationsanzeige nach Anspruch 2,
dadurch gekennzeichnet, daß bei kontinuierlicher Änderung der Konzentration der Lösung (2) die erste Markierung (14) kontinuierlich in die zweite Markierung (12) übergeht, so daß kontinuierlich Zwischenwerte der Konzentration zwischen dem ersten und zweiten Konzentrationsbereich der Lösung (2) anzeigbar sind.

5. Konzentrationsanzeige nach einem der Ansprüche 2 bis 4,
dadurch gekennzeichnet, daß der zweite Konzentrationsbereich einer nicht ausreichenden Konzentration der Lösung (2) entspricht.

6. Konzentrationsanzeige nach einem der vorhergehenden Ansprüche,
dadurch gekennzeichnet, daß die Lösung (2) eine Salzlösung zum Regenerieren eines Enthärters mit einem Ionenaustauscher ist und der zweite Konzentrationsbereich einer Salzkonzentration entspricht, in dem ein ausreichendes Regenerieren des Enthärters nicht mehr oder nur noch eingeschränkt gewährleistet ist.

7. Konzentrationsanzeige nach einem der Ansprüche 2 bis 6,
dadurch gekennzeichnet, daß die der aktuellen Konzentration entsprechende Markierung aus einer Richtung beobachtbar ist, die unter einem Winkel zur Oberfläche der Lösung (2) steht.

8. Konzentrationsanzeige nach einem der Ansprüche 2 bis 7,
dadurch gekennzeichnet, daß die Konzentrationsanzeige einen Lichtleiter (30) aufweist, durch den die der aktuellen Konzentration der Lösung (2) entsprechende Markierung beobachtbar ist.

9. Konzentrationsanzeige nach einem der vorhergehenden Ansprüche,
dadurch gekennzeichnet, daß der Schwimmer (10) drehbar oder schwenkbar gelagert ist und die Verschwenkung um diese Lagerung von der Konzentration der Lösung (2) abhängt.

10. Konzentrationsanzeige nach Anspruch 9,
dadurch gekennzeichnet, daß der Schwimmer (10) an der der Lagerung (20) gegenüberliegenden Seite einen Bogenabschnitt (24) aufweist und an diesem Bogenabschnitt (24) die Markierungen so angeordnet sind, daß im ersten Konzentrationsbereich der Lösung die erste Markierung (12) und im zweiten Konzen-trationsbereich die zweite Markierung (14) sichtbar ist.

11. Konzentrationsanzeige nach Anspruch 10,
dadurch gekennzeichnet, daß der Bogenabschnitt (24) zu einem Kreisring (26) um den Schwimmer (10) verlängert ist.

12. Konzentrationsanzeige nach einem der Ansprüche 9 bis 11,
dadurch gekennzeichnet, daß der Schwimmer (10) einen oberen Anschlag, der im ersten Konzentrationsbereich der Lösung (2) erreicht wird, und einen unteren Anschlag aufweist, der erreicht wird, wenn die Konzentration in den zweiten Konzentrationsbereich absinkt, so daß der Schwenkbereich des Schwimmers (10) innerhalb von 180 Winkelgraden liegt.

13. Konzentrationsanzeige nach einem der vorhergehenden Ansprüche,
dadurch gekennzeichnet, daß der Schwimmer (10) in einer Aufnahmeeinrichtung (40) gelagert ist, die wiederlösbar an einer Wand eines Vorratsgefäßes für die Lösung (2) befestigbar ist.

14. Konzentrationsanzeige nach Anspruch 13,
dadurch gekennzeichnet, daß die Aufnahmeeinrichtung (40) ein Beobachtungsfenster (42) aufweist, durch das die Markierungen (12, 14) beobachtbar sind.

15. Konzentrationsanzeige nach Anspruch 14,
dadurch gekennzeichnet, daß die Aufnahmeeinrichtung an der oberen Wand des Vorratsgefäßes wiederlösbar befestigbar ist und weiterhin eine Wandung (44) aufweist, in der beim Befestigen der Aufnahmeeinrichtung (40) an der Wand des Vorratsgefäßes Luft (3) eingeschlossen wird, so daß sich in der Wandung eine Grenzfläche Luft/Lösung ausbildet und der Schwimmer (10) teilweise in die Luft in der Hülse auftaucht.

16. Konzentrationsanzeige nach Anspruch 14 oder 15,
dadurch gekennzeichnet, daß an der Aufnahmeeinrichtung (40) der Lichtleiter (30) zum Beobachten der Markierungen des Schwimmers (10) befestigt ist.

17. Konzentrationsanzeige nach Anspruch 16,
dadurch gekennzeichnet, daß das Beobachtungsfenster (42) und der Lichtleiter (30) einstückig sind.

18. Konzentrationsanzeige nach einem der vorhergehenden Ansprüche,
dadurch gekennzeichnet, daß der Schwimmer (10) nur eine Markierung aufweist, die durch ein Beobachtungsfenster (42), das mindestens zwei Markierungen aufweist, beobachtbar ist, wobei
in einem ersten Konzentrationsbereich der Lösung (2) die Markierung des Schwimmers (10) auf die erste Markierung des Beobachtungsfensters (42) zeigt, und
in einem zweiten Konzentrationsbereich die Markierung des Schwimmers (10) auf die zweite Markierung des Beobachtungsfensters (42) zeigt.
